Europäisches Patentamt

**European Patent Office**

**Office européen des brevets**

(11) Numéro de publication: **0 263 137 B1**

(12) **FASCICULE DE BREVET EUROPEEN**

(45) Date de publication de fascicule du brevet: **02.12.92** (51) Int. Cl.⁵: **H02P 6/02**

(21) Numéro de dépôt: **87902101.2**

(22) Date de dépôt: **20.03.87**

(86) Numéro de dépôt internationale :
**PCT/FR87/00087**

(87) Numéro de publication internationale :
**WO 87/05757 (24.09.87 87/21)**

(54) **CIRCUIT DE COMMANDE DE LA COMMUTATION D'UN MOTEUR ET APPLICATION A LA VARIATION DE VITESSE DU CIRCUIT DE COMMANDE.**

(30) Priorité: **21.03.86 FR 8604099**

(43) Date de publication de la demande:
**13.04.88 Bulletin 88/15**

(45) Mention de la délivrance du brevet:
**02.12.92 Bulletin 92/49**

(84) Etats contractants désignés:
**AT BE CH DE GB IT LI LU NL SE**

(56) Documents cités:
**EP-A- 89 241      EP-A- 165 121**
**US-A- 3 153 185   US-A- 3 419 782**
**US-A- 3 769 555   US-A- 3 848 166**
**US-A- 4 035 699   US-A- 4 338 551**

(73) Titulaire: **ELENE SA**
**40 Rue Périer**
**F-92129 Montrouge(FR)**

(72) Inventeur: **NATHAN, Guy**
**12, avenue Victor Hugo**
**F-92170 Vanves(FR)**
Inventeur: **VICAINE, Bernard**
**Appt. 1707 14, villa d'Este**
**F-75648 Paris Cédex 13(FR)**

(74) Mandataire: **Debay, Yves**
**Cabinet Yves Debay, 122 Elysee 2**
**F-78170 La Celle Saint Cloud(FR)**

## Description

La présente invention concerne un circuit de commande de la commutation de l'alimentation d'un moteur et son application à la variation de vitesse.

Il est connu des circuits de commutation pour moteur, notamment pour moteur à courant continu sans balai. Un exemple de ces circuits de commutation est constitué par le brevet américain 3 364 407, qui décrit un circuit de commutation pour l'alimentation d'un moteur à courant continu sans balai, comportant un bobinage série à six points de sortie. Ce circuit de commutation est commandé par des capteurs à effel hall. En général, ce type de circuit comporte un certain nombre de semi-conducteurs assurant la commutation de la puissance et d'autres semi-conducteurs qui assurent la commande des éléments de commutation. Par ailleurs, ces types de circuits comportent un certain nombre d'éléments résistifs nécessaires au bon fonctionnement de l'électronique, qui occasionnent des pertes par effet joule et une dissipation, sous forme de chaleur, de la puissance fournie. Enfin, dans l'exemple de réalisation proposée dans ce brevet américain et dans l'art antérieur en général, il n'existe pas de découplage galvanique entre les éléments de commutation de la puissance et les éléments qui assurent la commande des éléments de commutation.

Il est également connu par le brevet américain 3 848 166 un dispositif de commutation électronique du type inverseur pour moteur électrique dans lequel des commutateurs constitués par un dispositif à brosse et balai ou par un dispositif magnétique ou photo-électrique entraîné en rotation alimentent un circuit électronique au travers de transformateurs de découplage, ce circuit électronique comportant quatre interrupteurs électroniques assemblés en pont et dont la diagonale est constituée par le bobinage statorique du moteur. Ce pont d'interrupteur permet par les commandes fournies par les secondaires des transformateurs de découplage d'inverser le sens de circulation du courant dans l'enroulement statorique du moteur. Toutefois ce dispositif nécessite des éléments de commutation supplémentaires permettant de commander par un découplage galvanique une autre paire d'interrupteurs électroniques qui permettent de stopper la conduction de l'un des quatre interrupteurs électroniques du pont de façon à supprimer la circulation du courant bien avant l'arrivée du commutateur sur la position de commutation suivante permettant l'inversion du sens du courant. Ce dispositif empêche donc l'alimentation du bobinage statorique du moteur pendant un angle de rotation donné, ce qui est fortement préjudiciable au rendement du moteur.

Un premier but de l'invention est par conséquent de pallier les inconvénients de l'art antérieur et de proposer un circuit de commutation pour l'alimentation en puissance des moteurs qui présente un isolement galvanique entre les signaux de commande et les organes de commutation de la puissance et comportant à la fois une disposition qui permette de réduire les pertes de puissance afin d'améliorer le rendement du moteur.

Ce premier but est atteint par le fait que le circuit de commande de la commutation d'un moteur à courant continu sans balai comprenant un élément excitateur solidaire en rotation de l'élément tournant du moteur, cet élément excitateur coopérant avec des capteurs fixes, de façon que l'élément excitateur passe successivement à proximité immédiate de chacun des capteurs, ces capteurs se trouvant normalement dans un état de haute impédance et passant à un état de basse impédance lorsque l'élément excitateur, dans son mouvement de rotation, passe à proximité immédiate du capteur, chaque capteur est monté dans un circuit comprenant en série un oscillateur unique et le bobinage primaire d'un transformateur associé à chaque capteur, ledit transformateur respectif comprenant au moins un bobinage secondaire dont une des bornes est reliée à l'entrée de commande d'un interrupteur statique dont la commutation est commandée en fonction de la position de l'élément excitateur pour assurer la transmission de la tension d'alimentation (+VM) au bobinage du moteur, est caractérisé en ce que ledit bobinage secondaire est relié par l'intermédiaire d'un circuit redresseur simple alternance et un circuit de filtrage à l'entrée de commande de l'interrupteur statique, l'élément excitateur couvre un secteur angulaire légèrement supérieur au secteur angulaire définissant l'espacement successif de deux capteurs, lesdits capteurs étant en nombre égal au nombre de points de sortie du bobinage du moteur et au nombre des bobinages du moteur et, régulièrement répartis autour de l'arbre moteur sur la périphérie de l'élément fixe du moteur et disposés selon des secteurs angulaires déterminés et réguliers.

Un deuxième but est de permettre l'utilisation de ce circuit avec un moteur à bobinage en étoile.

Ce deuxième but est atteint par le fait que le bobinage du moteur est en étoile et par le fait que l'élément excitateur couvre un secteur angulaire légèrement supérieur à 120 degrés, de façon à pouvoir exciter simultanément deux des trois capteurs associés au bobinage en étoile à trois branches.

Un troisième but est de permettre l'utilisation du circuit avec un moteur à bobinage symétrique.

Ce troisième but est atteint par le fait que chaque transformateur, associé à un capteur, comprend deux bobinages secondaires dont les sorties sont reliées, par l'intermédiaire d'un circuit redresseur simple alternance et d'un circuit de filtrage à, respectivement, un premier interrupteur statique reliant une moitié du bobinage symétrique du moteur à la polarité positive de la source d'alimentation en puissance du moteur et un deuxième interrupteur statique reliant l'autre moitié du bobinage à la polarité négative de la source d'alimentation en puissance du moteur.

Un autre but de l'invention est de permettre l'utilisation du circuit pour un bobinage série, symétrique et à quatre points de sorties.

Ce but est atteint par le fait que l'élément excitateur couvre un secteur angulaire légèrement supérieur à 90 degrés, de façon à pouvoir exciter, simultanément, dans certaines positions angulaires, deux des quatre capteurs associés à chacune des sorties du bobinage à quatre points.

Un autre but de l'invention est d'avoir une aptitude du circuit à l'utilisation de composants de technologies différentes, tels que des transistors MOS ou des transistors bipolaires, que l'on utilisera en fonction des puissances à transmettre au moteur.

Ce but est atteint par le fait que l'interrupteur statique est constitué par un transistor MOS et le transformateur a un rapport de transformation égal à 1.

Selon une autre caractéristique ce but est également atteint par le fait que l'interrupteur statique est constitué par un transistor bipolaire et le transformateur a un rapport de transformation égal à 1/n.

Un autre but de l'invention est la commande de la mise en marche ou l'arrêt du moteur.

Ce but est atteint par le fait que le fonctionnement du circuit oscillateur peut être innibé par un interrupteur dont la position ouverte commande l'arrêt du moteur et la position fermée la mise en marche.

Un dernier but de l'invention est de permettre une application à la variation de vitesse de ce circuit.

Ce dernier but est atteint par le fait que le fonctionnement du circuit oscillateur est inhibé par un interrupteur statique dont le temps de fermeture est déterminé par un circuit électronique commandé en fonction de la vitesse de rotation du moteur.

D'autres caractéristiques et avantages de la présente invention apparaîtront plus clairement à la lecture de la description ci-après faite en référence aux dessins annexés dans lesquels :

la figure 1 représente le schéma du circuit électronique de conmutation appliqué à un moteur à bobinage série avec quatre points de sorties;

La figure 2 représente la position de l'élément excitateur par rapport aux capteurs et au champ créé par l'élément inducteur du rotor;

La figure 3 repésente un diagrammme temporel des signaux transmis par le circuit de la figure 1;

La figure 4 représente un exemple d'application du circuit de commande de conmutation à la commutation d'un moteur à bobinage en étoile.

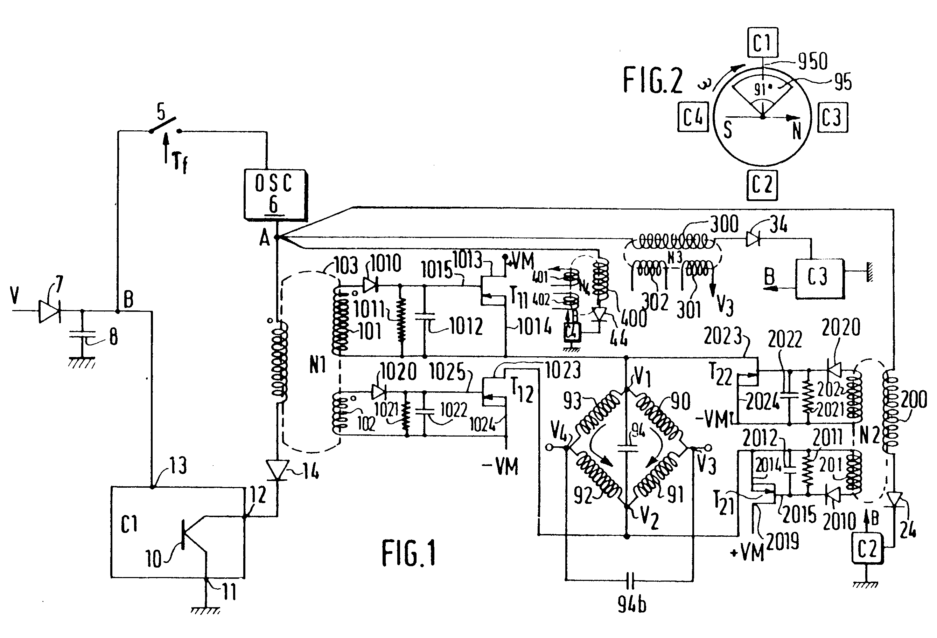

La figure 1 représente un moteur (9) dont le bobinage du stator est constitué par quatre bobines (90) à (93), montées en série suivant un contour polygonal comportant quatre points de sortie (V1), (V2), (V3), (V4). Le point de sortie (V1) est relié, d'une part à la source (1014) d'un transistor MOS constituant un interrupteur statique (T11). Le drain (1013) de ce transistor MOS est relié à la polarité positive de la tension d'alimentation (VM) du moteur. Le point commun à la source (1014) et à la borne (V1) est également relié à une des bornes de sortie d'un bobinage secondaire (101). Ce bobinage secondaire (101) appartient à un transformateur (N1) qui, à titre d'exemple peut être à noyau torique (103). La deuxième borne du bobinage secondaire (101) est reliée à l'entrée de commande (1015) de l'interrupteur statique (T11), constitué par le transistor MOS par une diode de redressement (1010) et un circuit de filtrage constitué par une résistance (1011) et un condensateur (1012) branché, en parallèle aux bornes de la diode (1010) et du bobinage secondaire (101). Le transformateur (N1) comporte un bobinage primaire (100) et un deuxième bobinage secondaire (102). Comme on peut le voir sur la figure 1 , les sens des bobinages sont identiques. La borne de sortie (V2), appartenant au sommet opposé du polygone constitué par les bobinages (90) à (93), est reliée à la sortie (1023) de l'interrupteur statique (T12) qui est constitué par le drain du transistor MOS. L'entrée de commande (1025) de l'interrupteur statique (T 12) est reliée au deuxième enroulement secondaire (102), par l'intermédiaire d'un circuit de filtrage constitué par la résistance (1021) et le condensateur (1022) montés en parallèle aux bornes d'un circuit comprenant en série, le deuxième enroulement secondaire (102) et une diode de redressement (1020). La borne du deuxième enroulement (102), qui est reliée directement à la résistance (1021) et au condensateur (1022), se trouve également reliée à la sortie (1024) de l'interrupteur statique (T12), sortie qui dans le cas d'un transistor MOS est constituée par la source. L'enroulement primaire (100) du transformateur (N1) se trouve relié, d'une part à la tension d'alimentation ( + V) du circuit de commande au travers d'un oscillateur (6), d'un interrupteur (5) et d'une diode (7) d'autre part à la masse, par l'intermédiaire d'une diode (14) et d'un circuit (C1) . Ce circuit (C1) est constitué par un trigger de Schmitt à effet hall comportant, une borne d'alimentation (13), une borne de sortie vers la masse (11) et la sortie (12). Dans ce circuit (C1) un transistor (10) est monté en collecteur ouvert, de façon à ce que le collecteur soit relié à la borne de sortie (12) tandis que, l'émetteur est relié par la borne de sortie (11) à la masse. Lorsque la came magnétique se trouve en vis-à-vis du capteur (C1), le transistor (10) conduit et relie, par conséquent, la sortie (12) à la masse. Ce type de circuit est commercialisé par la firme ( SPRAGUE) sous la référence numéro (UGN 3013). La borne d'alimentation (13) est reliée à la masse par un condensateur (8), et par une diode (7) à la tension (+V). L'interrupteur (5) du circuit de la figure 1 peut être, soit un interrupteur simple , soit, comme on le verra ultérieurement, un interrupteur statique qui peut être commandé par un circuit électronique, suivant une loi variant en fonction de la vitesse de rotation du moteur. Dans ce cas, cet interrupteur (5) permettra, comme on le verra ultérieurement, de faire une régulation de la vitesse du moteur. Le point commun (A) du bobinage primaire (100), du transformateur (N1), et de l'oscillateur unique (6), est également relié à trois autres bobinages primaires, respectivement (200), (300), (400) des transformateurs respectifs (N2), (N3), (N4). Ces transformateurs (N2), (N3), (N4) sont associés aux capteurs (C2), (C3), (C4) et aux points d'alimentation (V2), (V3), (V4) du bobinage du moteur. Le transformateur (N2) associé au capteur (C2) est relié, d'une part au point commun (A), d'autre part, par l'intermédiaire d'une diode (24), à ce capteur (C2). Le premier enroulement secondaire (201) permet de relier la borne d'alimentation positive (+VM) au point d'alimentation (V2) du bobinage du moteur (9), au travers de l'interrupteur statique (T21). Cet interrupteur statique (T21) est commandé par le signal fourni par le bobinage secondaire (201) du transformateur, au travers de l'élement redresseur simple alternance (2010) et du circuit de filtrage (2011, 2012). Le deuxième enroulement secondaire (202) du transformateur (N2) permet de commander, au travers de la diode de redressement ( 2020) et du circuit de filtrage (2021, 2022), la grille du transistor MOS (T22), qui va permettre de relier la source (2024) de ce transistor branchée à la borne d'alimentation en tension moteur (VM), de polarité opposée, au drain (2023) . Le drain (2023) de ce transistor MOS (T22) est relié au point de sortie (V1) du bobinage moteur opposé au point de sortie (V2) associé au premier enroulement secondaire (201) du transformateur (N2). Comme on peut le comprendre sur la figure 1, le point (A) est également relié à un transformateur (N3) dont le premier enroulement secondaire (301) , branché en série avec une diode (34) et un capteur (C3) commande un interrupteur statique (T31) assurant l'alimentation du point (V3) avec la tension de polarité positive (+VM) et le second enroulement secondaire (302) commande un deuxième interrupteur statique (T32) assurant l'alimentation du point de sortie opposé (V4) avec la tension de polarité négative (-VM). De même, un quatrième transformateur (N4), branché en série avec une diode (44) et un capteur (C4) est relié au point (A). Le premier secondaire (401) de ce transformateur (N4) permettra de commander l'interrupteur statique (T41) qui permet de relier la borne de tension de polarité positive (+VM), au point (V4) de sortie du bobinage du moteur (9). Enfin, le second enroulement secondaire (402) permet de commander l'interrupteur statique (T42) qui permet d'assurer la liaison du point de sortie (V3) avec la borne d'alimentation en tension de polarité opposée (-VM).

Dans une variante du circuit de la figure 1, on peut supprimer les condensateurs (1012), (1022), (2022), (2012), (3012), (3022), (4012), (4022) à condition de modifier les valeurs des condensateurs (94 et 94b) branchés respectivement entre les points (V1,V2) et (V3,V4). Ces condensateurs (94 et 94b) ayant pour but d'amortir les surtensions apparaissant dans les enroulements du moteur. Lorsque les interrupteurs statiques du circuit sont constitués par des transistors MOS, les différents transformateurs (N1), (N2), (N3) et (N4) ont un rapport de transformation égal à 1. Ce circuit peut être utilisé dans le cas où la puissance du moteur le requiert avec des interrupteurs statiques du type transistor bipolaire. Dans ce cas on remplace les transistors MOS par des bipolaires dont le collecteur remplace le drain, l'émetteur la source et la base la grille. Dans le cas des transistors bipolaires, les différents transformateurs (N1), (N2), (N3), (N4) sont des abaisseurs de tension et ont par conséquent un rapport de transformation égal à 1 /n . L'oscillateur (6) travaille à une fréquence très élevée, qui peut être de l'ordre de 500 knertz ou 1 MHz.

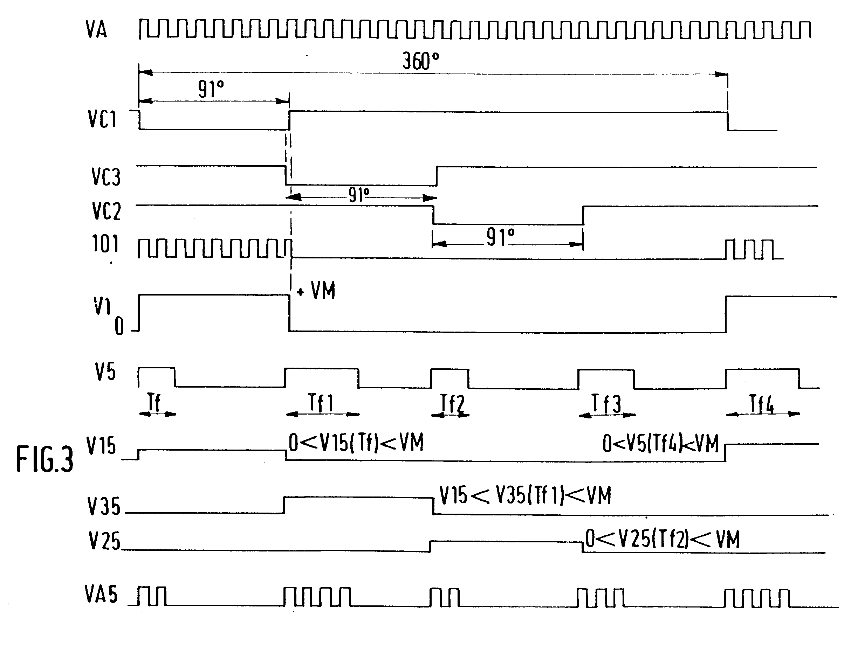

La figure 2 représente la position de l'élément excitateur (95) constitué par une came magnétique formant un secteur angulaire de l'ordre de 91 degrés, de façon à assurer un léger recouvrement entre deux capteurs, dans certaines positions angulaires. Les capteurs (C1) à (C4) sont répartis régulièrement à la périphérie du rotor suivant des angles de 90 degrés. L'axe de symétrie (950) de l'élément excitateur (95) est comme on peut le voir à la figure 2, disposé perpendiculairement à la direction du champ magnétique créé par le rotor (96). La position de la came magnétique (95) d'un côté de la direction du champ magnétique créé par le rotor (96) permet d'assurer la rotation du moteur dans un certain sens, tandis que l'inversion de cette position, par rapport à la direction du champ magnétique représenté par la flèche nord-sud (96), permet d'inverser le sens de rotation. Dans ce cas, la position de départ de la camme serait en face du capteur (C2). Dans le cas où la came se trouve dans la position représentée à la figure 2, le capteur (C1) est excité et par conséquent le primaire du transformateur (N1) est relié à la masse. L'interrupteur (5) étant fermé, l'oscillateur est alimenté et le signal de l'oscillateur est transmis aux enroulements secondaires (101), (102) qui vont assurer la commutation des interrupteurs statiques. Cette commutation assure le passage du courant dans les bobinages du moteur (9) dans le sens indiqué par les flèches. Le passage du courant va assurer la rotation du rotor dans le sens indiqué par la flèche(ω)et lorsque la came (95) se trouvera en face du capteur (C3) les points (V3) et (V 4) du bobinage seront respectivement reliés aux tensions ( + VM) et (-VM).

La figure 3 représente le diagramme temporel des signaux pendant une rotation complète d'un tour de la came (95). Le signal (VC1) représente la tension à la borne de sortie (12) du capteur (C1), le signal (VC3) représente la tension à la borne de sortie (32) du capteur (C3). Lorsque le signal (VC1) est au niveau 0, le signal (VA) , fourni par la sortie de l'oscillateur (6), est transmis au travers du transformateur (N1) et assure, après redressement et filtrage , la commutation du transistor (T11) pour transmettre la tension ( + VM) à la borne (V1). Le signal (V15) représente la tension d'alimentation du moteur. Le signal (V5) représente la tension à la borne d'entrée de l'oscillateur . Ce signal (V5) est constitué de créneaux de durée (Tf), (Tf) étant le temps de fermeture de l'interrupteur (5), ce temps de fermeture varie dans une plage allant d'une période du signal de l'oscillateur à une durée égale à la durée d'excitation d'un capteur à effet hall correspondant à un angle légèrement supérieur à 90 degrés sur les 360 degrés de rotation du rotor. Le signal (VA5) représente la sortie de l'oscillateur en fonction de l'inhibition représentée par la tension (V5) .Pendant le temps de fermeture de l'interrupteur (5), l'oscillateur fonctionne, ce qui procure aux bornes du moteur un signal représenté par la ligne (V15). Etant donné que l'oscillateur ne fonctionne plus pendant toute la durée de passage de la came devant le capteur, les interrupteurs statiques, associés à chaque capteur, ne vont transmettre la tension (VM) que pendant une durée inférieure a la durée d'excitation d'un capteur à effet Hall. Ainsi, la tension moyenne d'alimentation du moteur est comprise entre (0) et la valeur maximum (VM). La tension moyenne d'alimentation du moteur lorsque le temps de fermeture de l'interrupteur (5) est (Tf) est représentée par la courbe (V15), de même pour un temps de fermeture (Tf1) de l'interrupteur (5) plus long que (Tf), la tension moyenne d'alimentation (V35) entre les bornes (V3) et (V4) sera supérieure à la tension (V15) et inférieure à la tension (VM). On comprend donc qu'en faisant varier les temps (Tf) dans les limites indiquées, on arrive à faire varier la tension d'alimentation du moteur et par conséquent, sa vitesse de rotation. En agissant sur le temps de fermeture (Tf), lorsque l'interrupteur (5) est un interrupteur statique, au moyen d'un circuit électronique, de façon que (Tf) varie en fonction des variations de la vitesse de rotation du moteur, on arrive ainsi à réguler la vitesse de rotation. Dans le cas ou l'interrupteur (5) est simplement manuel, en ouvrant le circuit, on arrête le moteur et en fermant cet interrupteur, on met en route le moteur.

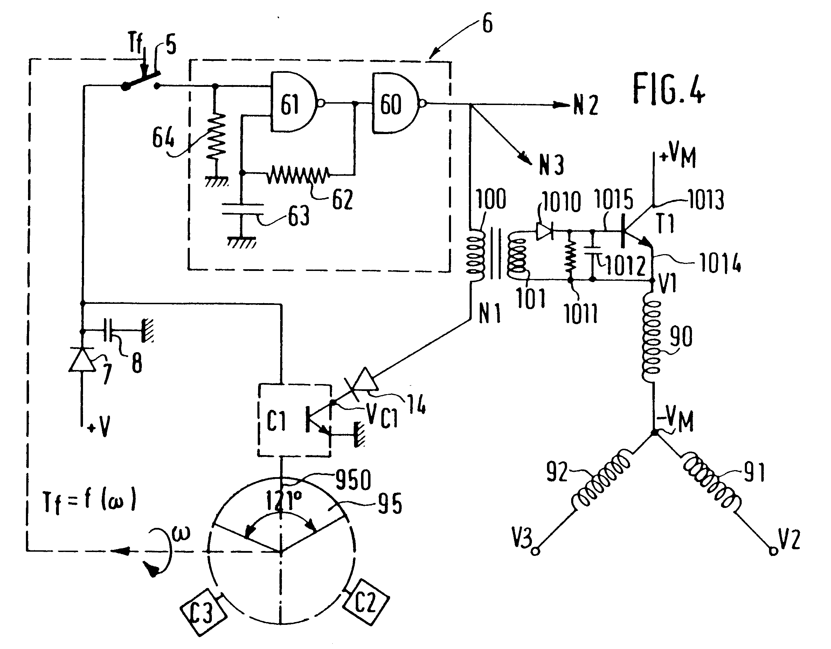

La figure 4 représente un mode de réalisation du circuit de commutation, appliqué à un moteur à bobinage en étoile. Ce bobinage comporte trois branches (90), (91), (92), reliées chacune à un point commun, lequel est alimenté par le pôle négatif de la source de tension (VM). Dans cette application, les éléments identiques dûs au circuit de la figure 1, comportent les mêmes références. On remarquera que les transformateurs (N1), (N2), (N3), comportent ici un seul enroulement secondaire (101), respectivement (201) et (301). Le circuit associé à l'enroulement (101) est constitué par une diode de redressement (1010), une résistance (1011) et un condensateur (1012) constituant un circuit de filtrage et un transistor bipolaire (T1) dont l'émetteur (1014) est relié au point (V1) du bobinage (90), la base (1015) est reliée au point commun du circuit de filtrage et de redressement et, le collecteur (1013) est relié à la borne positive de l'alimentation en tension (VM). Comme le moteur comporte seulement trois bobinages, on associe à chacun des bobinages, un capteur (C1)-,respectivement, (C2), (C3), un transformateur (N1), (N2), (N3) et un transistor (T1), (T2), (T3) avec le circuit associé. Ces trois capteurs sont régulièrement répartis entre eux à la périphérie du rotor, suivant des angles de 120 degrés et se trouvent, tour à tour, excités par une came magnétique (95) formant un angle de 121 degrés qui permet à cette came d'exciter, dans certaines positions, deux capteurs en même temps. Comme précédemment, l'axe de symétrie (950) de cette came est disposé perpendiculairement à l'axe représentant le champ tournant du rotor. Si l'on adjoint à l'axe du rotor des capteurs permettant de mesurer la vitesse de rotation de cet axe et à ces capteurs un circuit électronique permettant de commander la fermeture de l'interrupteur statique (5) pendant des temps (Tf) tels que Tf = f(ω) , on arrive ainsi, grâce à ce circuit non représenté à réguler la vitesse du moteur. L'oscillateur (6) peut être réalisé sous la forme d'une porte NON-ET (60) dont l'entrée reçoit la sortie d'une porte NON-ET (61) à deux entrées. La sortie de la porte NON-ET (61) est reliée par l'intermédiaire d'une résistance (62) à une des entrées de la porte (61) d'une part, et d'autre part, par l'intermédiaire d'un condensateur (63) à la masse. La deuxième entrée de la porte NON-ET (61) est reliée, d'une part à l'interrupteur statique (5) et d'autre part, par l'intermédiaire d'une résistance (64) à la masse. Lorsque cet interrupteur statique (5) est fermé, c'est-à-dire en état de conduction, la deuxième entrée de la porte NON-ET (61) est reliée à la tension (+V) , ce qui provoque l'oscillation du circuit (6). Dans le cas où l'interrupteur statique (5) est ouvert, c'est-à-dire dans l'état bloqué, l'oscillateur (6) est arrêté. A la sortie de l'oscillateur (6) sont branchés, comme on peut le comprendre sur la figure 4, les trois enroulements primaires (100), (200), (300) des transformateurs respectifs (N1), (N2), (N3) dont l'autre borne est reliée, par l'intermédiaire des diodes de protection (14), (24), (34) aux capteurs à effet hall (C1), (C2), (C3). Comme on l'a déjà expliqué, la diode (7) et le condensateur (8) protègent le circuit contre les erreurs de branchement de polarité.

D'autres modifications sont possibls Ainsi, il est bien évident que les capteurs à effet hall (C1), (C2), (C3) peuvent éventuellement être remplacés par des capteurs opto-électroniques ou tout autre capteur remplissant la même fonction.

**Revendications**

1.  Circuit de commande de la commutation d'un moteur à courant continu sans balai comprenant un élément excitateur (95) solidaire en rotation de l'élément tournant du moteur, cet élément excitateur coopérant avec des capteurs (C1), (C2), (C3) fixes, de façon que l'élément excitateur (95) passe successivement à proximité immédiate de chacun des capteurs, ces capteurs (C1), (C2), (C3) se trouvant normalement dans un état de haute impédance et passant à un état de basse impédance lorsque l'élément excitateur, dans son mouvement de rotation, passe à proximité immédiate du capteur, chaque capteur (C1), (C2), (C3) est monté dans un circuit comprenant en série un oscillateur unique (6) et le bobinage primaire (100), (200), (300) d'un transformateur (N1), (N2), (N3) associé à chaque capteur (C1), (C2), (C3), ledit transformateur respectif (N1) comprenant au moins un bobinage secondaire (101) dont une des bornes est reliée à l'entrée de commande d'un interrupteur statique (T1) dont la commutation est commandée en fonction de la position de l'élément excitateur pour assurer la transmission de la tension d'alimentation (+VM) au bobinage (90) du moteur, caractérisé en ce que ledit bobinage secondaire (101) est relié par l'intermédiaire d'un circuit redresseur simple alternance (1010) et un circuit de filtrage (1011, 1012) à l'entrée de commande de l'interrupteur statique (T1),l'élément excitateur couvre un secteur angulaire légèrement supérieur au secteur angulaire définissant l'espacement successif de deux capteurs (C1), (C2), (C3), lesdits capteurs étant en nombre égal au nombre de points de sortie du bobinage du moteur (90), (91), (92) et au nombre des bobinages du moteur et, régulièrement répartis autour de l'arbre moteur sur la périphérie de l'élément fixe du moteur et disposés selon des secteurs angulaires déterminés et réguliers.

2.  Circuit selon la revendication 1, caractérisé en ce que le bobinage du moteur est en étoile.

3.  Circuit selon la revendication 2, caractérisé en ce que l'élément excitateur (95) couvre un secteur angulaire légèrement supérieur à 120 degrés, ce façon à pouvoir exciter simultanément deux des trois capteurs (C1), (C2),(C3) associés à un bobinage en étoile à trois branches (90),(91),92).

4.  Circuit selon la revendication 1 , caractérisé en ce que chaque transformateur (N1 ), (N2), (N3), (N4), associé à un capteur (C1 ), (C2), (C3), (C4) comprend deux bobinages(101,102), respectivement (201,202), (301,302), (401, 402) secondaires dont les sorties sont reliées par l'intermédiaire d'un circuit redresseur simple alternance (1010, 1020) et d'un circuit de filtrage (1011 , 1012), (1021 1022) a respectivement un premier interrupteur statique (T11) reliant une moitié du bobinage symétrique du moteur à la polarité positive de la tension d'alimentation (VM) et un deuxième interrupteur statique (T12) reliant l'autre moitié du bobinage du moteur à la polarité négative de la tension d'alimentation (VM) du moteur.

5.  Circuit selon la revendication 4, caractérisé en ce que le bobinage symétrique du moteur est en série et à quatre points de sortie (V1), (V2), (V3), (V4), l'élément excitateur (95) couvre un secteur angulaire légèrement supérieur à 90 degrés, de façon à pouvoir exciter dans certaines positions angulaires, simultanément deux des quatre capteurs (C1), (C2), (C3), (C4) associés à chacune des sorties (V1), (V2), (V3), (V4) du bobinage à quatre points.

6.  Circuit selon une des revendications 3 ou 5, caractérisé en ce que l'interrupteur statique est constitué par un transistor MOS et le transformateur a un rapport de transformation égal à 1.

7.  Circuit selon une des revendications 3 ou 5, caractérisé en ce que l'interrupteur statique est constitué par un transistor bipolaire et le transformateur a un rapport de transformation égal à 1/n .

8. Circuit de commande selon une des revendications précédentes, caractérisé en ce que le fonctionnement du circuit oscillateur (6) est inhibé par un interrupteur (5) dont la position ouverte commande l'arrêt du moteur et la position fermée la mise en marche.

9. Application à la variation de vitesse de ce circuit de commande, selon une des revendications précédentes, caractérisé en ce que le fonctionnement du circuit oscillateur (6) est inhibé par un interrupteur statique (5) dont le temps de fermeture (Tf) est déterminé par un circuit électronique commandé en fonction de la vitesse de rotation du moteur.

**Claims**

1. Circuit for controlling the switching of a brushless d.c. motor including an exciting element (95) rotary-integral with the rotating element of the motor, said exciting element cooperating with fixed sensors (C1), (C2), (C3) so that the exciting element (95) successively moves immediately close to each sensor, these sensors (C1), (C2), (C3) normally being in a state of high impedance and moving to a low impedance state when the rotating exciting element moves immediately close to the sensor, each sensor (C1), (C2), (C3) being mounted in a circuit including in series a single oscillator (6) and the primary winding (100), (200), (300) of a transformer (N1), (N2), (N3) associated with each sensor (C1), (C2), (C3), said respective transformer (N1) including at least one secondary winding (101) with one of its terminals being connected to the control input of a static switch (T1) whose switching is controlled according to the position of the exciting element so as to ensure transmission of the serviceable voltage ($+VM$) to the winding (90) of the motor, wherein said secondary winding (101) is connected by means of a single alternation rectifying circuit (1010) and one filtering circuit (1011, 1012) at the control input of the static switch (T1), the exciting element overlaps an angular sector slightly larger than the angular sector defining the successive spacing of two sensors (C1), (C2), (C3), said sensors being equal to the number of output points of the winding of the motor (90), (91), (92) and equal to the number of windings of the motor and regularly distributed around the motor shaft over the periphery of the fixed element of the motor and disposed along specific regular angular sectors.

2. Circuit according to claim 1, wherein the winding of the motor is a star-shaped winding.

3. Circuit according to claim 2, wherein the exciting element (95) overlaps an angular sector slightly larger than 120 degrees so as to be able to simultaneously excite two of the three sensors (C1), (C2), (C3) associated with a star-shaped winding with three branches (90), (91), (92).

4. Circuit according to claim 1, wherein each transformer (N1), (N2), (N3), (N4) associated with one sensor (C1), (C2), (C3), (C4) includes two secondary windings (101, 102), respectively (201, 202), (301, 302), (401, 402) whose outputs are connected by means of a single alternation rectifying circuit (1010, 1020) and a filtering circuit (1011, 1012), (1021, 1022) has respectively one first static switch (T11) connecting one half of the symmetrical winding of the motor to the positive polarity of the serviceable voltage (VM) and one second static switch (T12) connecting the other half of the winding of the motor to the nagative polarity of the serviceable-voltage (VM) of the motor.

5. Circuit according to claim 4; wherein the symmetrical winding of the motor is in series and at four output points (V1), (V2), (V3), (V4), the exciting element (95) overlapping one angular sector slightly larger than 90 degrees so as to be able to simultaneously excite in certain angular positions two of the four sensors (C1), (C2), (C3), (C4) associated with each of the outputs (V1), (V2), (V3), (V4) of the 4-point winding.

6. Circuit according to either claim 3 or 5, wherein the static switch is formed of one MOS transformer and the transformer has a transformation ratio equal to 1.

7. Circuit according to claim 3 or 5, wherein the static switch is formed of a bipolar transistor and the transformer has a transformation ratio equal to 1/n.

8. Control circuit according to any one of the preceding claims, wherein the functioning of the oscillator circuit (6) is inhibited by a switch (5) whose open position controls stoppage of the motor and the closed position its starting.

9. Application for varying the speed of this control circuit according to one of the preceding claims, wherein the functioning of the oscillator circuit (6) is inhibited by a static switch (5) whose closing time (Tf) is determined by an electronic circuit controlled according to the rotation speed of the motor.

## Patentansprüche

1. Steuerkreis der Schaltung eines bürstenlosen Gleichstrommotors, bestehend aus einem Erregerteil (95), das bei Drehung fest mit dem Drehteil des Motors verbunden ist, wobei das Erregerteil mit fest angebrachten Meßwertgebern (C1, C2, C3) zusammenarbeitet, indem das Erregerteil (95) nacheinander dicht an diesen Meßwertgebern (C1, C2, C3) vorbeiläuft, welche normalerweise eine hohe Impedanz, beim vorbeilaufen des Erregerteils (95) jedoch eine geringe Impedanz aufweisen, wobei sich jeder Meßwertgeber (C1, C2, C3) in einem Stromkreis befindet, in dem ein einzelner Oszillator (6) und die Primärwicklung (100, 200, 300) eines dem jeweiligen Meßwertgeber (C1, C2, C3) zugeordneten Transformators (N1, N2, N3) in Serie geschaltet sind und der jeweilige Transformator (N1) mindestens eine Sekundärwicklung (101) aufweist, deren eine Klemme an den Steuereingang eines statischen Unterbrechers (T1) angeschlossen ist, dessen Schaltung je nach Position des Erregerteils erfolgt, um die Übertragung der versorgungsspannung (+VM) zur Wicklung (90) des Motors zu gewährleisten, **dadurch gekennzeichnet,** daß die Sekundärwicklung über eine Gleichrichterschaltung mit einfacher Wechselfolge (1010) und einen Filterkreis (1011, 1012) an den Steuereingang des statischen Unterbrechers (T1) angeschlossen ist und das Erregerteil einen Winkelbereich abdeckt, der leicht über dem Winkelbereich liegt, der den Abstand zwischen je zwei aufeinanderfolgenden Meßwertgebern (C1, C2, C3) bestimmt, wobei die Anzahl der Meßwertgeber der Anzahl der Ausgänge der Motorwicklung (90, 91, 92) sowie der Anzahl der Wicklungen des Motors entspricht, welche gleichmäßig nach bestimmten Winkelbereichen um die Motorwelle und auf der Peripherie des feststehenden Motorteils angebracht sind.

2. Steuerkreis nach Patentanspruch 1, dadurch gekennzeichnet, daß die Wicklung des Motors in Sternschaltung realisiert ist.

3. Steuerkreis nach Patentanspruch 2, dadurch gekennzeichnet, daß das Erregerteil (95) einen Winkelbereich abdeckt, der leicht über 120° liegt, sodaß zwei von drei einer in Sternschaltung mit drei Zweigen (90, 91, 92) zugeordneten Meßwertgebern (C1, C2, C3) gleichzeitig erregt werden können.

4. Steuerkreis nach Patentanspruch 1, dadurch gekennzeichnet, daß jeder einem Meßwertgebern (C1, C2, C3, C4) zugeordnete Transformator (N1, N2, N3, N4) zwei Sekundärwicklungen (101, 102 bzw. 201, 202 bzw. 301, 302 bzw. 401, 402) besitzt, deren Ausgänge über eine Gleichrichterschaltung mit einfacher Wechselfolge (1010, 1020) und einen Filterkreis (1011, 1012 bzw. 1021, 1022) mit einem ersten statischen Unterbrecher (T11), über den eine Hälfte der symmetrischen Wicklung des Motors an die positive Polung der Versorgungsspannung (VM) angeschlossen ist, sowie mit einem zweiten statischen Unterbrecher (T12), über die andere Hälfte der symmetrischen Wicklung des Motors an die negative Polung der Versorgungsspannung (VM) angeschlossen ist, verbunden sind.

5. Steuerkreis nach Patentanspruch 4, dadurch gekennzeichnet, daß die symmetrische Wicklung des Motors in Serie mit vier Ausgängen (V1, V2, V3, V4) geschaltet ist und das Erregerteil einen Winkel von leicht über 90° abdeckt, sodaß bei bestimmten Winkelstellungen zwei von vier den vier Ausgängen (V1, V2, V3, V4) der vierpoligen Wicklung zugeordneten Meßwertgeber (C1, C2, C3, C4) gleichzeitig erregt werden können.

6. Steuerkreis nach Patentanspruch 3 oder 5, dadurch gekennzeichnet, daß der statische Unterbrecher aus einem MOS-Transistor besteht und der Transformator ein Umsetzungsverhältnis 1:1 hat.

7. Steuerkreis nach Patentanspruch 3 oder 5, dadurch gekennzeichnet, daß der statische Unterbrecher aus einem Zweipol-Transistor besteht und der Transformator ein Umsetzungsverhältnis 1:n hat.

8. Steuerkreis nach einem der vorigen Patentansprüche, dadurch gekennzeichnet, daß die Funktion des Oszillatorkreises (6) durch einen Schalter (5) verhindert wird, der bei geöffneter Stellung das Anhalten und bei geschlossener Stellung das Anlaufen des Motors steuert.

9. Anwendung zur Drehzahlverstellung dieses Steuerkreises nach einem der vorigen Patentansprüche, dadurch gekennzeichnet, daß die Funktion des Oszillatorkreises (6) durch einen statischen Unterbrecher (5) verhindert wird, dessen Schließzeit (Tf) von einer elektronischen Schaltung je nach Drehzahl des Motors bestimmt wird.

FIG.2

FIG.1

FIG.3

EP 0 263 137 B1

FIG.4